(19)

**Europäisches Patentamt**
**European Patent Office**
**Office européen des brevets**

(11)  **EP 4 307 280 B1**

(12) **EUROPEAN PATENT SPECIFICATION**

(45) Date of publication and mention
of the grant of the patent:
**13.08.2025 Bulletin 2025/33**

(21) Application number: **22184750.2**

(22) Date of filing: **13.07.2022**

(51) International Patent Classification (IPC):
*G09F 3/00* (2006.01)   *G06Q 30/00* (2023.01)
*G06Q 50/04* (2012.01)   *B42D 25/40* (2014.01)
*B29C 64/386* (2017.01)   *B33Y 50/00* (2015.01)
*G06F 30/10* (2020.01)   *G06Q 30/018* (2023.01)
*B29C 64/10* (2017.01)   *B33Y 10/00* (2015.01)
*B42D 25/305* (2014.01)   *G06F 30/20* (2020.01)
*G06F 113/10* (2020.01)   *B42D 25/28* (2014.01)

(52) Cooperative Patent Classification (CPC):
**B33Y 10/00; B29C 64/10; B42D 25/28;**
**B42D 25/305; G06F 30/10; G06F 30/20;**
**G06Q 30/018; G06Q 50/04;** B29C 64/188;
B29C 64/30; B29C 64/386; G06F 2113/10;
Y02P 10/25

(54) **METHOD FOR GENERATING A DIGITAL OBJECT IDENTIFIER (DOI) OF AN ADDITIVELY MANUFACTURED COMPONENT BY ANALYZING NATURAL MICROSTRUCTURE VARIATION**

VERFAHREN ZUM ERZEUGEN EINES DIGITALEN OBJEKTBEZEICHNERS (DOI) EINES ADDITIV GEFERTIGTEN BAUTEILS DURCH ANALYSE DER NATÜRLICHEN MIKROSTRUKTURVARIATION

PROCÉDÉ DE GÉNÉRATION D'UN IDENTIFIANT D'OBJET NUMÉRIQUE (DOI) D'UN COMPOSANT FABRIQUÉ DE MANIÈRE ADDITIVE EN ANALYSANT LA VARIATION NATURELLE DE LA MICROSTRUCTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.01.2024 Bulletin 2024/03**

(73) Proprietor: **Bundesrepublik Deutschland, vertreten durch den Bundesminister für Wirtschaft und Klimaschutz, dieser vertreten durch den Präsidenten der 12205 Berlin (DE)**

(72) Inventors:
• **WASKE, Dr., Anja**
 **01159 Dresden (DE)**
• **HOHENDORF, Stefan**
 **14478 Potsdam (DE)**

(74) Representative: **Zimmermann & Partner Patentanwälte mbB Postfach 330 920 80069 München (DE)**

(56) References cited:
**US-A1- 2016 042 261   US-A1- 2018 293 591**

• **SONG CHEN ET AL: "My Smartphone Recognizes Genuine QR Codes!", PROCEEDINGS OF THE ACM ON INTERACTIVE, MOBILE, WEARABLE AND UBIQUITOUS TECHNOLOGIES, ACMPUB27, NEW YORK, NY, USA, vol. 2, no. 2, 5 July 2018 (2018-07-05), pages 1 - 20, XP058485201, DOI: 10.1145/3214286**
• **TIWARI AKASH AKASH TIWARI@TAMU EDU ET AL: "Protection against Counterfeiting Attacks in 3D Printing by Streaming Signature-embedded Manufacturing Process Instructions", PROCEEDINGS OF THE 2021 RESEARCH ON OFFENSIVE AND DEFENSIVE TECHNIQUES IN THE CONTEXT OF MAN AT THE END (MATE) ATTACKS, ACMPUB27, NEW YORK, NY, USA, 19 November 2021 (2021-11-19), pages 11 - 21, XP058662604, ISBN: 978-1-4503-8552-7, DOI: 10.1145/3462223.3485620**

EP 4 307 280 B1

- **DACHOWICZ ADAM ET AL: "Microstructure-Based Counterfeit Detection in Metal Part Manufacturing", JOM: JOURNAL OF METALS, SPRINGER NEW YORK LLC, UNITED STATES, vol. 69, no. 11, 9 August 2017 (2017-08-09), pages 2390 - 2396, XP036427165, ISSN: 1047-4838, [retrieved on 20170809], DOI: 10.1007/ S11837-017-2502-8**

**Description**

TECHNICAL FIELD

The present invention relates to labelling and identification techniques of components such as machine parts generated by additive manufacturing techniques.

In all the world's research laboratories, it is imperative to label samples and parts under investigation unambiguously so that no mix-ups can occur. This applies all the more to industrial companies, especially those producing components or products for safety-relevant sectors (e.g. the aviation industry, the military, and the automotive industry). The elaborate documentation of all manufacturing and processing steps is pointless if the wrong physical component or sample is accidentally or even intentionally assigned to these digital data.

Therefore, a one-to-one, non-destructive, non-tamperable component identification is required, which allows a one-to-one assignment between a physical component and digital data thereof during the whole manufacturing process of a given product and during its lifetime, i.e. in use and/or in storage.

STATE OF THE ART

Similar to facial or fingerprint recognition, object-specific micro scaled or sub micro scaled features, collectively called herein microfeatures, can be extracted from a complex 3D or even 2D data set, such as a photograph or scan of a component, to create a digital fingerprint of the component. This data can then be stored in an abbreviated and/or encrypted form as a digital object identifier - DOI.

US 2016 / 042 261 A1 discloses a structurally encoded component and method of manufacturing such comprising embedded voids used as markers. Song Chen et al. (2018) disclose in the article "My Smartphone Recognizes Genuine QR Codes! Practical Unclonable QR Code via 3D Printing" (published in PROC. ACM ON INTERACTIVE, MOBILE, WEARABLE AND UBIQUITOUS TECHNOLOGIES. ACMPUB27, NEW YORK, NY, USA, 2(2):1-20 DOI: 10.114513214286) a method for protecting additively manufactured articles with the aid of a QR code. The QR code is generated on the product and synchronised with the same 3D printer. Tiwari Akash et al. (2021) published in PROC 2021 RESEARCH ON OFFENSIVE AND DEFENSIVE TECHNIQUES IN THE CONTEXT OF MAN AT THE END (MATE) ATTACKS, ACMPUB27, NEW YORK, USA, pages 11-21, DOI: 10.1145/3462223.3485620 the article "Protection against Counterfeiting Attacks in 3D Printing by Streaming Signature-embedded Manufacturing Process Instructions". Dachowicz Adam et al. (2017) according to their article "Microstructure-Based Counterfeit Detection in Metal Part Manufacturing" (published in JOURNAL OF METALS. SPRINGER NEW YORK LLC. UNITED STATES, 69(11): 2390-2396, DOI: 10.1 007/51 1 837-017-2502-8 use the inherent randomness of the microstructure as a result of the manufacturing process of a product to authenticate it. An optical protocol (PUF - Physically Unclonable Function) is used to generate a micrograph as INPUT and a compact, unambiguous string representation of the micrograph as OUTPUT. However, this method is destructive and uses etched surfaces of a material sample. US 2018 / 293 591 A1 discloses a system and a method for authenticating additively manufactured components using a double key. The additive manufacturing comprises the production of a first component identifier. Using this, a second component identifier is generated with the aid of an encryption key. The second component identifier is produced additively on the component. Both identifiers are stored in a database. An end user can determine whether a component is authentic using the database.

Therefore, a technique for creating a DOI of a component or sample is required, which does not possess the indicated drawbacks.

SUMMARY OF THE INVENTION

Advantageously, the internal structure of an additively manufactured component can be studied using 3D imaging methods, e.g. computed tomography (CT), which reveal in great detail even small defects, irregularities or artefacts, e.g. pores, inclusions, density variations, as well as small variations in geometry. Such structural and/or compositional microfeatures can be listed in form of a table that forms a unique digital object identifier DOI for each component. The characters in the table have typically a standardized format. The signs and characters comprising the suggested DOI can favourably be selected from, for instance, ISO8859-1 graphic character set. In order to further compress the data of structural and/or compositional microfeatures, the table comprising them, is translated into, e.g., a binary number string (001010...) or an alphanumeric string which is unique to the particular component as well. By using a suitable and openly accessible software this string is further converted into another compressed format, e.g. a quick response (QR) code. The QR code allows for compact visualization of the table and good machine readability of the component's digital identifier. Said QR code is physically attached to the component or can be printed on a surface thereof which is not subject to wear. A permanent "attachment" of the chosen digital object identifier can be reached, e.g., by electrochemical labelling or etching, direct laser writing, dot peening or similar techniques.

It is important to note that the sum of the above structural features, collectively called herein microfeatures, is individual for each component and therefore suitable to achieve one-to-one identification. Even if a series of components (e.g. a lot) is produced with the same additive manufacturing apparatus and applying identical processing parameters, these components will be discernible by their DOI. On the one hand, it is impossible to reproduce or implement the individually observed microfeature pattern of one component for another component. On the other hand, it is impossible to subsequently manipulate the microfeature pattern. Therefore, the proposed digital object identifier generated on the basis of the individual microfeature pattern cannot be falsified and cannot be manipulated, i.e. it is tamper-proof. The invention is defined in the appended claims.

According to an embodiment, a method for of generating a digital object identifier of a component is suggested. The method comprises:

- obtaining digital image data of the component either by using a digital 2D- or 3D-imaging technique or by digitizing an analogue image, e.g. a radiographic film, wherein the component is produced by an additive manufacturing process;

- identifying a microfeature within the component in the digital image data of the component;

- determining a coordinate, comprising x, y and/or z of the identified microfeature; and

- generating the digital object identifier of the component by indicating the coordinate (x, y) or (x, y, z) of the identified microfeature.

Typically, the component is examined radiographically or by computer tomography and the 2D or 3D image data obtained are analyzed. Advantageously, the suggested method can be integrated into a quality control process for additively manufactured parts.

According to an embodiment, the microfeature (f) in the suggested method is selected from:

i) features of the microstructure, like e.g. a void, a pore, a crack, a density inhomogeneity, an inclusion, a region with a density different from the main phase of the component, and

ii) features of a crystallographic structure, like e.g. a grain with a crystallographic symmetry form such as cubic, tetragonal, trigonal, hexagonal or orthorhombic; an intermetallic phase, and a monocrystalline region.

Advantageously, such microfeatures are present in all additively manufactured parts if the spatial resolution of the imaging method is sufficiently high. Therein *"sufficiently high"* means, that the resolution corresponds to the size of the microfeature and is, e.g., at least 1/5 (one fifth) or a 1/10 (one tenth) the length, depth, or diameter of the microfeature.

According to an embodiment, the suggested method further comprises detecting a parameter characterizing the identified microfeature, selected from: a length, a distance, a diameter, a surface, a volume, a grey value, and a surface roughness; wherein the indicated coordinates x, y and/or z characterize a numerical center of the microfeature - e.g. a center of gravity of the microfeature, wherein generating the digital object identifier comprises identifying at least 10, preferably at least 100 microfeatures and arranging, e.g. listing, at least ten of the detected parameters for each identified microfeature in a matrix, such as e.g. a table, wherein the matrix is the digital object identifier.

Advantageously, the form of a matrix or table allows for a conversion into different machine-readable formats like QR code or alphanumeric strings, but presents one of the shortest ways the information about the microstructure obtained using method [10] can be stored.

According to an embodiment, the digital image data are generated during the additive manufacturing process. For instance, they are generated in parallel, i.e. simultaneously, as a measure of in-process monitoring by recording and storing a sequence of 2D images, taken at different times of the manufacturing process. Typically, for a layer-based additive manufacturing digital images or frames of different layers of the component during its layer by layer fabrication are recorded.

While typically the ready manufactured component is examined radiographically or by computed tomography and the 2D or 3D images obtained are analyzed, digital image data can alternatively be obtained already during the manufacturing process of the component. Advantageously, generating the data during the production of the part saves time in the quality control steps after the production, as the data are available together with the component.

According to an embodiment, the suggested method further comprises defining a range for the parameter, wherein only salient/individual internal microfeatures falling within the range are used for generating the digital object identifier.

Advantageously, defining a range for the parameters allows to save data needed to construct the digital object identifier by concentrating on the most relevant microfeatures.

According to an embodiment, a number n of identified microfeatures f is reduced from a total number N of identified microfeatures f to n = 1 - 1000, preferably to n = 10 - 100 by applying the range defined above, more preferably 10 - 30.

It should be borne in mind that a typical CT dataset will contain $X \cdot Y \cdot Z$ elements, i.e. approximately about $2000 \cdot 2000 \cdot 2000 = 8 \cdot 10^9$ elements, i.e. $8 \cdot 10^9$ different voxels. Even if only 10 different randomly distributed microfeatures (e.g. pores) are assumed for a given component, their individual arrangement yields sufficiently different patterns for a myriad of components. In view thereof, advantageously, using preferably 10 to 100 microfeatures gives statistical security for the uniqueness of the digital identifier, while at the same time the identifier is slightly overdetermined, such that in case of loss of a region of the physical part, one would still be able to reconstruct the identifier. Therefore, a number of microfeatures within the range of 10 to 30 represents a good compromise of measurement effort (time) and reliability of the DOI generated from it.

According to an embodiment, the range is selected from a range for a diameter d, a length *l*, or a thickness t, wherein the length *l*, the diameter d, and the thickness t is selected within the range of:

- $0.001 \text{ mm} \leq d \leq 2 \text{ mm}$; preferably $0.005 \text{ mm} \leq d \leq 2 \text{ mm}$;
- $0.001 \text{ mm} \leq l \leq 2 \text{ mm}$; and
- $0.001 \text{ mm} \leq t \leq 2 \text{ mm}$.

Advantageously, this range of microfeature sizes are typical for additively manufactured components produced, e.g., by one of: a powder bed fusion (LPBF) technique or a variation thereof, like Selective Laser Melting (SLM), Selective Laser Sintering (SLS), Electron Beam Melting (EBM) and Direct Metal Laser Sintering (DMLS), which are all applied to a layer or a bed comprising metal and/or ceramic particles; a binder jetting or a material jetting technique used with particles comprising a polymer, a ceramic, or a metal; a material extrusion technique in which a material is drawn through an optionally heated nozzle, comprising a continuous deposition of the extruded material; and a wire arc melting technique, comprising a metal melting in an electric arc.

According to an embodiment, the identified microfeature (f) is a pore and/or an inclusion, and the detected parameter is the volume $V_i$ of the $i^{th}$ pore and/or the volume of the inclusion, wherein generating the digital object identifier comprises detecting and indicating a volume fraction epsilon ($\varepsilon$), with epsilon ($\varepsilon$) = $\text{sum}(V_i)/V_{Comp}$ for pores and/or inclusions as a checksum for checking the digital object identifier; wherein $\text{sum}(V_i)$ is a total volume of all n pores or all n inclusions within the defined range, and $V_{Comp}$ is the total volume of the component.

Advantageously, such and similar microfeatures are easily to identify using digital photography, radiography, and computed microtomography discussed there as digital 2D and 3D imaging techniques.

According to an embodiment, the x, y and/or z coordinates of a first identified microfeature relate to a virtual origin, wherein the virtual origin comprises the x, y and/or z coordinates of a second identified microfeature; or the virtual origin comprises a mark, selected from a prominent structure at a contour of the component; wherein the x, y and/or z coordinates of the first identified microfeature indicate a minimum or a maximum extension or distance of the first microfeature to the second microfeature along an x-, an y-, and/or an z- axis, which may be indicated in the tabulated digital object identifier, e.g., as Px1/2, Py1/2, and/or Pz1/2.

Advantageously, a table, i.e. a matrix, is easily readable and allows failure-proof digital methods of data extraction.

According to an embodiment, generating the digital object identifier of the component comprises at least one algebraic operation. Particularly, the characters in the table can be coded or decoded in ASCII and converted into a binary string. The number of possible characters is limited to A...Z, a...z, 1...9, additionally special characters can be used. The usable ASCII code range, defined in ISO 8859-1, includes the values from 21h to 7Eh / 33d to 126d this corresponds 93 characters which can be decoded in binary. It is possible to develop a unique conversion but ASCII is a defined standard which is used. Developing a unique conversion would make only sense if we could decrease the number of bits for conversion

Advantageously, algebraic operations are robust.

According to an embodiment, the imaging technique is selected from:
a digital radiography, an X-ray computed tomography, an X-ray diffraction, an infrared imaging, e.g. by using an IR camera, e.g. a dual-band IR camera as common in nondestructive testing.

Advantageously, optical tomography can be applied for optically transparent polymers and/or optically transparent or at least translucent ceramics. Wavelength ranges, e.g. within the wavelengths of UV and visible light can be selected depending on the material properties. As to IR-imaging, it is typically used as a 2D in-situ monitoring method during the building process in 3D printing. Despite the rather poor spatial resolution, microstructural features like pores or inclusions can be recognized quite well in the 2D and 3D datasets. In this respect, it is proposed according to the invention to use IR data also for the determination of the identifier.

According to an embodiment, the matrix comprises a table encompassing the detected parameters arranged in columns and rows, wherein each column or row characterizes one identified microfeature.

Advantageously, that allows for facilitated digital data processing, e.g. by easily identifying relevant data for further processing. Particularly, the detected features can be sorted in groups and can be easier selected by the algorithm. Furthermore, it is possible that only specific features are considered to create the DOI.

According to an embodiment, the digital object identifier is compressed and is represented by an alphanumeric and/or by a digital string, by a 2D digital code, e.g. a QR code; or by a 3D digital code.

Advantageously, the conversion into a 2d/3d code is associated with a massive reduction of the data. For creating the DOI only the most important features are used for the 2D/3D code.

According to one embodiment, the method further comprises: Generating a database. Therein, the database includes at least one digital object identifier and at least one of the following: a name and/or product and/or catalog number of the component, an image or photograph of the component, e.g., a reduced icon corresponding to the digital image, a date of manufacture of the component, a batch number or lot number of a material used to manufacture the component, a name and/or number of a customer using the component, a number/name/identification of the machine, assembly line, or production line used in manufacturing the component, etc.. The QR code is not a pointer or a reference to a database. It's the direct fingerprint of the object or respective a part of the object (DOI). This means, the computed data of the DOI is directly coded in the QR code and can be read out without a database in the background.

The resulting advantages are apparent, as component-relevant data are stored together with the DOI: Information from the database are linked with the 2D/3D code and backtraceable in both directions.

According to an embodiment, a file format of the digital image is selected from a GIF, a TIF, a TIFF, a PNG, a SVG and comprises a header with data indicating conditions of image acquisition, e.g. voltage and current of X-ray source, detector type, exposure time, detector resolution, X-ray source, parameters (e.g. current, voltage, distances), objective type for X-ray microscope; ROI, date/time - if applicable. Other, e.g. even proprietary file formats which are characteristic for the CT equipment used or which are generated by a software package used for reconstruction can also be selected.

Advantageously, such file formats are preferred which do not suffer from data loss resulting from compression algorithms during file generation, which rules out, e.g., .jpeg files.

According to an embodiment, the additive manufacturing process for fabricating the component is selected from:

- a powder bed fusion (LPBF) technique and its variations Selective Laser Melting (SLM), Selective Laser Sintering (SLS), Electron Beam Melting (EBM) and Direct Metal Laser Sintering (DMLS), which are all applied to a layer or a bed comprising metal and/or ceramic particles;

- a binder jetting or a material jetting technique used with particles comprising a polymer, a ceramic, or a metal;

- a material extrusion technique in which a material is drawn through an optionally heated nozzle, comprising a continuous deposition of the extruded material; and

- a wire arc melting technique, comprising a metal melting in an electric arc.

Advantages are apparent.

According to an embodiment, the use of a digital object identifier for identifying a component, wherein the digital object identifier is generated according to any of the embodiments above, and the component is selected from a part which is used in a field selected from: aviation industry, military, aerospace technology, medical technology, reactor and power plant technology, wind turbines, safety related applications, and automotive industry.

Advantages are apparent.

According to an embodiment, the mentioned use comprises an image registration process, wherein the component c is recognized as a previously known component c by a matching of the digital object identifier of the component with an entry of a database comprising a pre-existing digital object identifier which is identical with the digital object identifier of the component; or - alternatively - wherein the component is recognized as a previously unknown component c' and/or as a counterfeit c' by a mis-matching of the digital object identifier of the component c' with entries of the database comprising pre-existing digital object identifiers.

Advantages are apparent.

Embodiments are described above.

BRIEF DESCRIPTION OF THE DRAWINGS

**Fig. 1** shows schematically the suggested generation process of a unique object identifier DOI.

**Fig. 2** illustrates schematically the suggested generation of a DOI based on individual internal microfeatures of a component as described herein.

**Fig. 3** represents a flow-chart of the suggested method for obtaining the DOI of a component.

**Fig. 4** represents X-ray computed tomography images of additively manufactured steel cylinders.

DETAILED DESCRIPTION

In the following detailed description, reference is made to the accompanying figures, which form a part hereof, and in which are shown by way of illustration specific embodiments and features of the invention.

As used herein, the term "QR code" does not refer to the trademark "QR code", but rather to the corresponding technical encryption method, which is freely available. Further, a QR-code is indicated herein merely as an example for a machine-readable two-dimensional code that can be read by image capture. Reference is made to ISO/IEC 18004:2006 which defines the shape of a QR code. Other two-dimensional codes or encryption methods for generating such are known to the skilled person, e.g. two-dimensional bar code, data matrix code, CM code, Aztec code, to name a few.

A QR code is a typical two-dimensional code. An Aztec code is another two dimensional code. According to embodiments, codes other than two-dimensional codes may be used as compact and machine readable DOI. For example, a three-dimensional digital code may comprise of a two-dimensional digital code composed of similar elements arranged on a planar surface, the elements having different colour or grey values. Further, a three-dimensional digital code may be represented by a real three-dimensional shape, i.e., a solid structure, or a hologram to visualize such.

According to the invention a digital "fingerprint", i.e. a digital object identifier which is designated herein as DOI and a method for its generation is suggested. The DOI is generated from a pre-existing individual internal microstructure of the component that hence, is linked to the physical component for its entire lifetime. Particularly, the DOI is generated by extracting representative data, e.g., from CT measurements at the component. The DOI comprises data shown exemplarily in Table 1 further below, and can conveniently be converted into broadly used 2D formats like, e.g., a QR code, a data matrix code, or others, depending on the coding capacity which is required for the actual component. In principle, any 2D code that can contain enough data would work.

Thus, for improved machine readability and compactness, the tabulated measurement data comprising individual component characteristics (microfeatures) are translated into a binary code, and finally compressed as a machine readable code which is typically illegible for a human. Said exclusively machine readable code is applied to the component, for example in the form of a corresponding QR code. The table on which this compressed form of the digital object identifier is based (i.e. the actual DOI) is preferably created using a character set in accordance with ISO 8859-1. Consequently, all letters, numbers and special characters designated in this standard are available.

Advantageously this results in great flexibility for the description of the microfeatures acquired, e.g., by CT, digital photography, scanning or by extraction from a digitized analogue photograph (picture). The DOI itself is, so to speak, a spreadsheet with the values of about 100 to about 1000 most important microfeatures, while the QR code generated from it is merely an easily readable representation of the same.

To ensure that the component can be repeatedly identified by different CT measurements and/or devices, minimum technical requirements are defined. The fulfilment of at least some of these minimum technical requirements is a prerequisite for a reliable generation of the DOI.

Typical "minimum technical requirements" are, e.g., a minimum bit depth, e.g. 12 to 16 bits (4096...65535). A bit depth below 12 would comprise too little in gray values. A minimum contrast-to-noise ratio is at least equal to 5 or greater than 5, wherein the contrast exists between an image area depicting a pore, an inclusion, a crack etc. - i.e. the microfeature with respect to an image area depicting a homogeneous base material which is surrounding the microfeature - i.e. the "matrix" in the current image. Thus, the contrast-to-noise ratio (CNR) is used to determine a scan quality. The CNR is similar to the metric signal-to-noise ratio (SNR), but subtracts a term before taking the ratio. This is important when there is a significant bias in an image. A current image may have a high SNR metric, but a low CNR metric. Thus, the contrast-to-noise ratio as used herein is:

$$CNR = \frac{|S_f - S_M|}{\sigma_0} \geq 5 \qquad\qquad (1)$$

where $S_f$ is the signal intensity for the signal producing microfeatures and $S_M$ is the signal intensity for the signal producing matrix M in the region of interest, and $\sigma_o$ is the standard deviation of the pure image noise.

Another minimum technical requirement relates to the voxel size, i.e. an edge length of the three-dimensional "pixels" of the scan. Said minimum (!) edge length is typically defined herein as the largest sample diameter divided by 1000. In general, the voxel size is equal to the field of view divided by the matrix size.

As yet another minimum technical requirement a minimum spatial resolution of the image dataset used for determining the relevant markers of the sample's microstructure may be used. A preferred minimum spatial resolution is at least 0.5 $\mu$m - 2000 $\mu$m, preferably 1 $\mu$m - 100 $\mu$m. Indicated resolution values are expressed in $\mu$m = micrometer.

Algebraic operations used to calculate the DOI (i.e. the values exemplarily shown in Table 1) are selected to be robust enough to reliably deliver the same result regardless of lifetime (aging/wear) of the component and tomography device used.

The gray value data set of the scan is subjected to a segmentation. For this purpose, e.g.: the following commercial image processing software packages can be used: Avizo / Amira; VG Studio Max; Dragon Fly or ImageJ / Fiji. These perform the image segmentation step using different algorithms, e.g.:

    a. Histogram-based methods, e.g. by determining a threshold value in the histogram;
    b. Edge based algorithms, e.g. watershed transformation (Watershed algorithm);
    c. Region-based methods such as region growing.

If the data set is available as a binary data set after segmentation ("material" / "no material"), the features can be measured (e.g. a position and/or a volume be determined) and the table entries of the Digital Object Identifier (DOI) as exemplarily shown in Tab. 1 are derived.

Thus, standard segmentation routes and/or algorithms implemented by these or other software packages, like histogram thresholding, region-based segmentation or edge detection segmentation, can favorably be used to segment the relevant markers and to extract their geometrical properties from image data, like shown in Table 1.

All process steps up to this point describe the generation of the DOI.

Under certain conditions, e.g. if at least the minimum technical requirements mentioned above are fulfilled, the DOI of the component can already be created from a part of the data of a complete CT scan, wherein the part of data comprises a subset of all available data representing the unique internal microstructure of the component. Expressed in other words: Typically, the total number N of microfeatures $f_1$ through $f_N$ of a component is too large to be used for DOI generation.

Surprisingly, even a reduced set of microfeatures $f_1$ through $f_n$ , wherein $n \ll N$ is sufficient to create the DOI. Therefore, according to the invention, the time and costs for generating a really unique and individual DOI of a given component can greatly be reduced. The generated DOI allows for reproducible component identification.

Advantageously, the generation of a series of 2D image data, like radiographs or a series of infrared images taken during the production of the additively manufactured component, is much less time-consuming, as the data set can be created in a fraction of the acquisition time and data volume of a 3D tomographic data set. Even if this advantage is bought with a lower information gain, this is nevertheless predestined for industry-related applications, since the technology required is cheaper and requires less processing manpower than full 3D methods like a complete X-ray tomography of the component. Thus, according to the invention, 2D data for the calculation of the digital identifier can easily be obtained from a given 3D data set, independently from the penetrating wave used for the tomography.

Once a DOI has been generated for a component, this DOI can advantageously be used to identify the component during its lifetime, e.g. during a service inspection. Also, the DOI can be used for verification during delivery, e.g. within a complex production cycle of a machine to which the component belongs.

For this purpose, it is suggested to create a database, wherein the database comprises records correlating a given digital object identifier (DOI) with at least one of: a name and/or a product or catalogue number of the component, an image of the component, e.g. a reduced symbol corresponding to a photograph or a scan/digital image of the component, a date of manufacture of the component, a batch number of a material used for the manufacture of the component, a name and/or a number of a customer who has purchased or uses the component.

Thus, the later reassignment of a component to a database of existing DOIs, i.e. the "recognition of the DOI", or the "identification of a component" requires:

-   Creating the DOI of the component using the process steps described above; and

- Registering the segmented record generated from the DOI with the records of the database until a match is found.

Therein, the process of registering or image registration is the process of transforming different sets of data into one coordinate system, as used, e.g., for comparing multiple photographs, data from different sensors, times, depths, or viewpoints, in computer vision, medical imaging, or military automatic target recognition (cf. e.g.: Wikipedia-entry "Image registration".

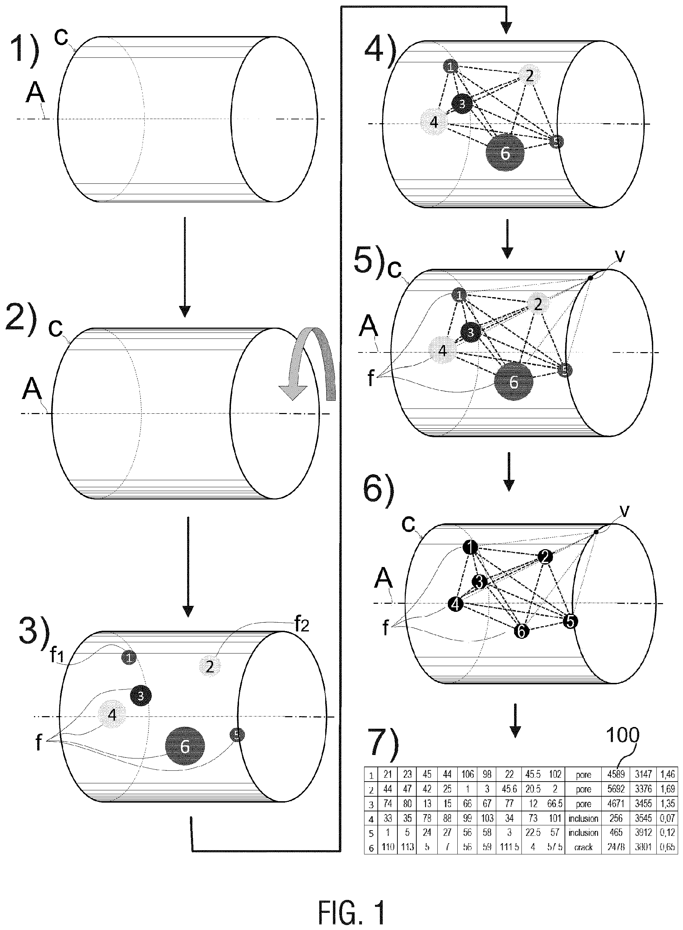

The suggested DOI and its generation is illustrated by attached Figs. 1 - 4.

**Fig.** 1 comprises Schemes 1) to 7) and illustrates the proposed process for generating a unique object identifier, i.e., a DOI. Scheme 1) in **Fig.** 1 shows the provision of component c for which a DOI is to be generated. It should be emphasized that the component c does not have to have a rotationally symmetrical shape like the cylinder in the diagram. However, component c has at least one major axis A or some other spatial feature such as length or diameter. These are advantageously used for a reproducible alignment or arrangement of the component c with respect to an X-ray beam. Examples of corresponding spatial features are e.g. an angle of incidence of the X-ray source in a tomographic measurement, a distance of a component surface to the X-ray source, a spot size of the incident X-ray beam on the component surface.

Thus, according to an embodiment, a surface of the component c may be selected for defining, e.g., a spot size of the incident X-ray beam on a surface of the component c to be set at a defined value. According to an embodiment, a distance between the selected surface of the component c and the X-ray source (bulb) can specifically be set as well to allow for reproducible measurements and acquisition of individual structural microfeatures f1-fn.

In Scheme 2) of **Fig.** 1 a circular arrow on the right side of the component c indicates a rotation of the component c around its main axis A during data acquisition, e.g., with X-ray tomography. The X-ray tomography reveals certain microfeatures f 1-6 that are unique to the given component c. In particular, they are unique with respect to their position, their nature or type, their size, and/or their orientation with respect to the major axis A or with respect to a predefined reference surface, such as a frontal surface (not shown).

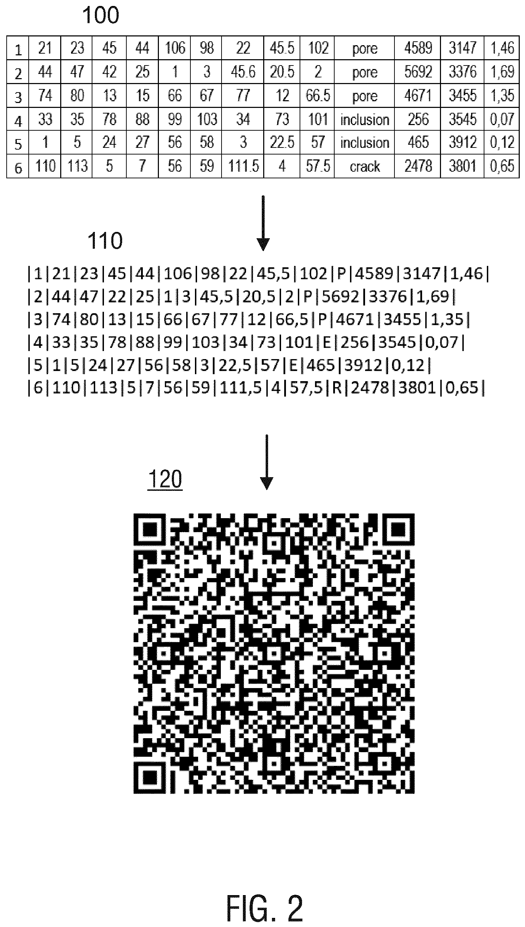

After completing the CT, a data set the size of typically some Terabyte is acquired. Of the whole data set merely some kilobyte are extracted by digital image processing comprising data segmentation and 3D reconstruction. Segmentation and 3D reconstruction finally allow the recognition, i.e. identification of the types of internal structural microfeatures (in Figs. 1 and 2: f1 through f6). The type, characteristics and position of these internal or component-inherent microfeatures f, are hidden to an observer, inspecting the component c visually. Depending on the actual wealth of available microfeatures f1-fn, in order to reduce the volume of data to be processed for DOI generation, a selection process is applied. According to an embodiment, first the types of available salient microfeatures of the component are detected. Typical types of salient microfeatures are pores, irregularities, inclusions and the like. All types are caused during the additive manufacturing of the component. Their occurrence may depend, e.g., from voids in a wire used in an arc melting technique. They might also be caused, e.g., by a variation of a wettability, e.g. during a binder jetting, if such is used during the additive manufacturing. Further, they might be caused by an electrostatic charging of a powder used in a powder- based manufacturing. Thus, Scheme 3) of **Fig.** 1 shows merely those six microfeatures f1-f6 used to generate a DOI of the actual component c.

Once the microfeatures f are selected for DOI generation, their characteristics are determined. Scheme 4) in **Fig.** 1 illustrates the process of correlating the individual positions (x, y, z) of microfeatures f1-f6 with each other, schematically indicated by bold dotted lines.

Optionally, a reference point v or marker v, i.e. one or a few reference point(s) which are here designated as virtual reference point(s) v, can be defined on the component for better identification and registration as described below. The reference point v can be used as a virtual coordinate origin to which the x, y and z coordinates refer. According to an embodiment a functionally edge of a component's contour or a recess in a component's surface can be selected as marker v. Reference of microfeatures f1-f6 with respect to a virtual reference point v is illustrated by thin dotted lines in Scheme 5) of **Fig. 1.**

Scheme 6) of **Fig. 1** illustrates the transfer of obtained structural data to a digital position model, wherein specific characteristics are digitally assigned to a position of each feature. All or selected microfeatures are transferred to a matrix, e.g. a table, as shown in Scheme 7) of **Fig. 1** and illustrated in Tab. 1 below.

In particular, the microfeatures f are analyzed with respect to their position in the dataset (x,y,z), their geometrical properties like, e.g. their volume (voxel size) and to their type . A microfeature f can be further characterized by its voxel size (volume). The position of the feature can be given using different definitions, for example by using the gravitational center of mass of the feature, or the minimum and maximum extension of the microfeature along the x-, y-, and z- axis, respectively. Another option would be to find the smallest sphere that encloses the entire feature and use the sphere's center coordinate as a representation for the position of the feature. Therein, the volume is indicated in a number of voxels comprising the microfeature, wherein a size or volume of the voxel is the same for each voxel of the current measurement. In order to determine the type of feature, its representative gray values needs to be compared to the of the feature's immediate surrounding. This can be carried out by comparing the gray value which is measured for a microfeature f at the gravitational center of the volume, with the one at a distance from its furthest extension in x, y or z. (e.g. + 20 pixels), and additionally a ratio of the corresponding values can be specified in a matrix or table, wherein the matrix or table is the very embodiment of the DOI. The coordinates are indicated in pixels. These do not have to be integers and usually are not, e.g., x=23,7, y=118,5, z=20.

**Fig. 2** schematically illustrates the conversion of the full, tabular object identifier 100 into an alphanumeric string 110 representing the same in a more compact form, as proposed in accordance with the present invention. As described above, the alphanumeric string 110 containing compressed data of selected internal structural microfeatures f may be converted into a two-dimensional digital code 120, such as the QR code shown. Said 2D code represents the DOI and is thus an equivalent embodiment of the same, just in a compressed and more easily machine-readable form.

As described above, the microfeatures f are typically obtained by computed tomography. However, according to embodiments, they even may be observed and recorded during the additive manufacturing of the component itself.

In particular, they can be obtained for only some selected manufacturing steps, e.g., by optical detection with a CCD image sensor, a digital camera, or an optical scanner during or after a selected manufacturing step, before a subsequent layer of the component material is applied.

If the additive manufacturing of the component comprises a layer-by-layer deposition, or is controlled by a slicing software, images of subsequently fabricated layers may be scanned and their characteristic microfeatures f be detected and then be used to create the DOI of the final part c. Advantageously, that allows for reduced measurement time and costs.

Expressed in other words, the suggested DOI of an additively manufactured component c can be generated using a unique set of internal structural microfeatures f1-fn of said component c. The schematic drawings in **Fig. 1** illustrates such a set of individual microfeatures f (1 through 6). The microfeatures f1-fn can be extracted not only from CT data, i.e. 3D images of the component, but also from corresponding 2D images, i.e. virtual "slices" of a stack of 2D images. Therein the stack comprises the whole component c or at least a section thereof. By using relative coordinates of the individual microfeatures f with respect to each other or, optionally, to a virtual origin v, the generation of the DOI is performed. It shall be stressed that the use of a virtual origin v is optional, and used here merely for better understanding. Its application could reduce the falsification security as long as it is disposed at the surface of the component, where it could be destroyed during use or, worse, be manipulated.

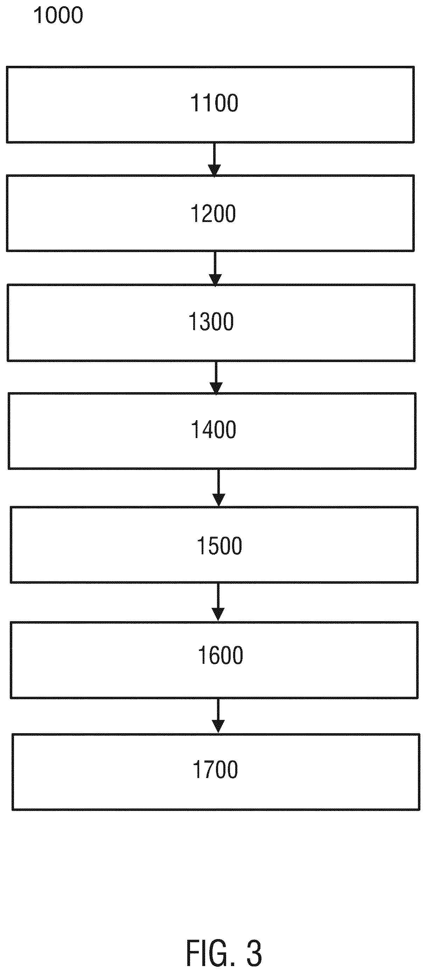

**Fig. 3** shows a flow-chart of the described method 1000 for obtaining the individual and unique identifier 100, 110, 120 of a component c, designated according to the invention as DOI of the component.

In particular, according to an embodiment step 1100 comprises providing the component for which a DOI shall be generated. Typically, the suggested method of generating the described digital object identifier is applicable to additively manufactured components. According to an embodiment process step 1100 comprises defining at least an axis, a surface, or an edge of the component which is usable as a reference with respect to which coordinates are designated.

Further, according to the illustrated embodiment step 1200 comprises one of: a scanning, obtaining a digital photography, and performing a computed tomography. It corresponds to Scheme 2) of **Fig. 1**.

Particularly, the scanning may comprise using a scanner, e.g. an image sensor such as a CCD line or CCD array. The scanning may also comprise acquiring photographs or image frames. It is performed for at least five, typically at least 10 different processed layers of an additively manufactured component. Scans or photos might be acquired, e.g., for layers No. 10-15, 25-30, and 35-40, if the component is built-up by a stack of 50 layers in an additive manufacturing process directed by a slicing software, wherein the 50 layers would be layers of the virtually sliced component. Different thereto the minimum number of individual projections for computed tomography is defined, for example, according to ISO 15708 Part 3 as: Minimum number = $0.5\pi \cdot n$, i.e. (PI/2)*n, where n is the matrix detector width. This is the number of detector pixels used in the horizontal direction. We always take the complete pixel number of a line here. However, if the line is only half illuminated, this can also be reduced. With 2000 pixels, this results in 3141 minimum projections. With 360°, an odd number of projections must always be achieved, e.g. even by adding some hundred projections - depending on the mechanics and geometry of the CT-apparatus used. A procedure according to the designated standard thus always defines the minimum requirement for a system (apparatus) for computed tomography.

During step 1300 the acquired data are processed by using a digital image processing software which comprises a segmentation and 3D reconstruction. Segmentation is the process of partitioning the acquired digital image into multiple image segments or regions comprising sets of pixels belonging to a certain microfeature f. The goal of the segmentation is to simplify and to ameliorate microfeature analysis. Further, the used 3D reconstruction comprises capturing the shape and appearance of the observed microfeatures f. For example, voids or pores and cracks are recognized as such.

Thereafter, in step 1400 their size (diameter, length) and orientation can be detected and expressed in pixels. Step 1400 corresponds to scheme 4) in **Fig. 1**.

As explained above, the correlation of the individual positions (x, y, z) of the observed microfeatures f1-fn can be done with respect to a real or virtual marker or reference point v. Its use is symbolized by the method step 1500, which corresponds to the scheme 5) in **Fig. 1**.

Subsequently, the obtained structural data are transferred into a digital position model, wherein specific characteristics are digitally assigned to a position of each feature. During this step a selection is made of all observed salient structural microfeatures . The selection is made in order to reduce further analysis time and data volume required for DOI generation. The selection process is based on applying specific thresholds for each type of microfeatures . The described step is symbolized by method step 1600, which corresponds to the scheme 6) in **Fig. 1.**

In the DOI, in principle all microfeatures can be recorded, but for a QR-code representing the DOI their number may have to be reduced to a reasonable number. Optimally starting with the largest features, so that these can also be definitely found again using another imaging system, which may not have as high a resolution as the system with which the first scan (computed tomography scan) was made.

In final step 1700, which corresponds to Scheme 7) of **Fig. 1,** the data are compiled in a matrix, e.g. a table comprising them is completed. The table (see Table 1) may favorably comprise columns comprising checking values of the used microfeatures . Particularly, the tabular compilation of the microfeatures used can advantageously include a checking value for each individual feature. Said checking value can be used to verify the correctness of the tabular values of the microfeature in question. For example, a cross sum or a quotient of discrete microfeature values can be used as a checking value.

As mentioned above and illustrated by **Fig. 2,** different representations of the compiled table can be used as DOI: A string 110 as well as a 2D-code, e.g. a QR-code 120.

**Tab. 1** Geometrical properties of exemplary microfeatures 1-6 comprising the DOI of a model component.

| f (No.) | Extension [pixel] | | | | | | Position data | | | Type | Grey value | | |
|---|---|---|---|---|---|---|---|---|---|---|---|---|---|
| | Px1 | Px2 | Py1 | Py2 | Pz1 | Pz2 | center (x) | center (y) | center (z) | | center | +20 px | ratio |
| 1 | 21 | 23 | 45 | 44 | 106 | 98 | 22 | 45.5 | 102 | pore | 4589 | 3147 | 1,46 |
| 2 | 44 | 47 | 42 | 25 | 1 | 3 | 45.6 | 20.5 | 2 | pore | 5692 | 3376 | 1,69 |
| 3 | 74 | 80 | 13 | 15 | 66 | 67 | 77 | 12 | 66.5 | pore | 4671 | 3455 | 1,35 |
| 4 | 33 | 35 | 78 | 88 | 99 | 103 | 34 | 73 | 101 | inclusion | 256 | 3545 | 0,07 |
| 5 | 1 | 5 | 24 | 27 | 56 | 58 | 3 | 22.5 | 57 | inclusion | 465 | 3912 | 0,12 |
| 6 | 110 | 113 | 5 | 7 | 56 | 59 | 111.5 | 4 | 57.5 | crack | 2478 | 3801 | 0,65 |

The pixel positions Px1, Px2, Py1, Py2, Pz1, Pz2 describe the minimum and maximum extension of the microfeature along the x-, y-, and z- axis, respectively. The center coordinates (x), (y), and (z) are the numerical center of gravity of the 3D feature. "Type" denotes the microfeature type, like pore, inclusion, or crack. Grey values at the center coordinates x/y/z of the raw (unsegmented) dataset and its surrounding (e.g. +20px), as well as their ratio, are given as an indicator for the type of feature. Columns 2-10 are extracted from 3D or 2d imaging data after a segmentation step, whereas columns 11-14 are extracted from the raw, unsegmented data.

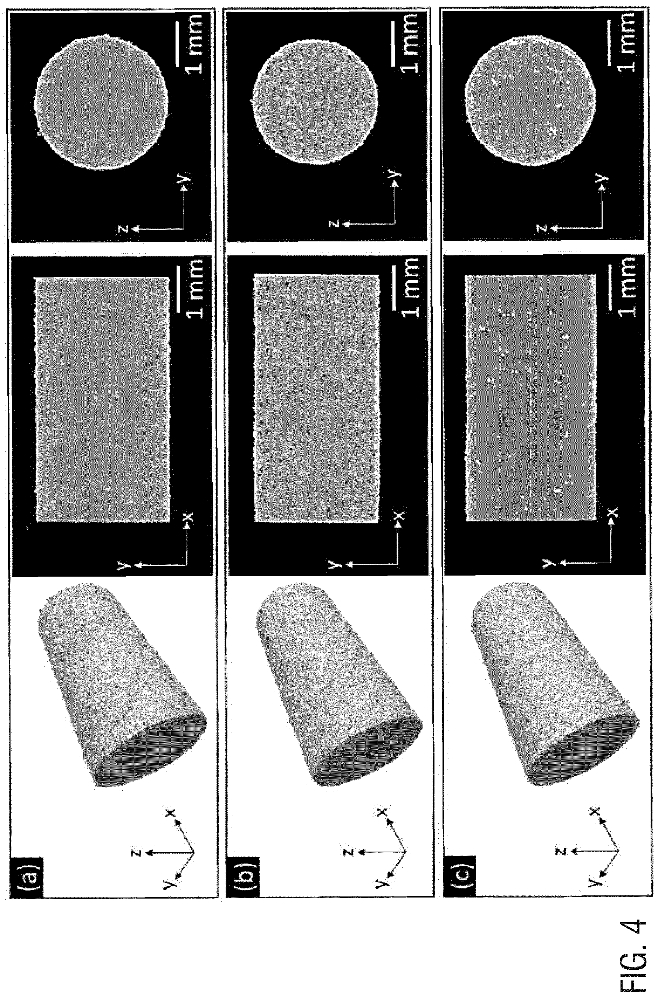

**Fig. 4** represents X-ray computed tomography images of additively manufactured 316L steel cylinders re-inforced with $CeO_2$ particles manufactured using the selective laser melting technique. The micrographs show a stochastic distribution in the volume of the component, with different degrees of porosity (black dots) and inclusions (white dots) shown in (a), (b) and (c), and some clustering of pores and inclusions close to the surface and the rotational axis of the cylinder. The figure is taken from O. Salman, A. Funk, A. Waske et al., "Additive Manufacturing of a 316L Steel Matrix Composite Reinforced with CeO2 Particles: Process Optimization by Adjusting the Laser Scanning Speed", Technologies 2018, 6, 25, which one of the inventors (A. Waske) co-authored.

The invention can alternatively be described by the aspects listed below:

- Use of 2D as well as 3D imaging and diffraction data such as data of digital radiography, computed tomography, X-ray diffraction, infrared imaging, or optical tomography of a component and exploitation of different inspection parameters to highlight salient microfeatures of the component, part, or sample;

- Exploiting natural variations in the microstructure of additively manufactured components as a one-to-one digital object identifier or sample marker, even for parts generated with identical manufacturing parameters;

- Proposed DOIs are applicable mainly for metallic components, but the proposed concept is applicable to other material classes as well, e.g. for ceramics, concrete, polymers;
  For pores (vacuum or gas): Using the center of gravity positions (x, y, z), the minimum/maximum extension along the x/y/z axis (Px1/2, Py1/2, Pz1/2) the equivalent diameter (d), the volumes (V) of a set of individual pores in the additively manufactured workpiece and the total porosity (epsilon = sum($V_i$)/$V_{Component}$)) as well as the size distribution (N=f(d)), N=f(V), N(f(x), N=f(y), N=f(z)); Therein, the terminus "equivalent spherical diameter" of an irregularly shaped feature is understood as a the diameter of a sphere with the same volume as the feature.

- Definition of threshold values for size and number of single pores N for calculation of the DOI. A threshold may restrict the used pores to comprise, e.g., only pores with a diameter > 5$\mu$m; only the 1000 largest pores, etc.);

- For inclusions (solid with a crystallographic or chemical phase deviating from main material/matrix): Using the centroid positions (x, y, z), the diameters (d), the volumes (V) of a set of inclusions in the additively manufactured component and the total volume fraction (epsilon = sum(V)/V$_{component}$)) as well as their size distribution (N=f(d)), N=f(V), N(f(x), N=f(y), N=f(z));

- Thresholds can be set for size and number of inclusions N used for generation of the DOI (e.g. only inclusions with d > 5 micrometers, only the 1000 largest inclusions, etc.).

- For cracks: Use of position, length, and shape of microcracks;

- For gray value veiling or density variations: Use of position and shape;

- Dimensional deviations inside, conditionally also outside;

- Identification and use of certain microfeatures in / (of) the component that are typical for the manufacturing facility;

- Grain structure, i.e. totality of monocrystalline regions of the component.

**Claims**

1. A method (1000) for generating a digital object identifier (100, 110, 120) of a component (c) comprising:

   - obtaining digital image data of the component (c), wherein the component (c) is produced by an additive manufacturing process;
   - identifying individual internal structural microfeatures ($f_1$-$f_n$) within the component (c) in the digital image data of the component (c);
   - determining **respective** coordinates of the identified individual internal structural microfeatures ($f_1$-$f_n$), **each** coordinate comprising x, y and z, **wherein determining the respective coordinates comprises analyzing positions of the individual internal structural microfeatures ($f_1$-$f_n$) in the digital image data;** and
   - generating the digital object identifier (100) of the component (c) by indicating the respective coordinates (x, y and z) of the identified individual internal structural microfeatures ($f_1$-$f_n$);
   wherein the individual internal structural microfeatures ($f_1$-$f_n$) are caused **during** the additive manufacturing process of the component (c), and selected from:

      i) a microstructure selected from: a void, a pore, a crack, a density inhomogeneity, an inclusion, a region with a density different from the main phase of the component, and
      ii) a crystallographic structure selected from: a grain comprising a crystallographic symmetry form such as cubic, tetragonal, trigonal, hexagonal or orthorhombic; an intermetallic phase; and a monocrystalline region; and

   wherein the individual internal structural microfeatures ($f_1$-$f_n$) are component-inherent microfeatures which are randomly distributed in the component (c).

2. The method according to claim 1, further comprising:

   - detecting a parameter of the identified individual internal structural microfeatures ($f_1$-$f_n$), selected from: a length, a distance, a diameter, a surface, and a volume, a grey value, and a surface roughness;
   wherein the indicated coordinates x, y and z characterize a numerical center of the individual internal structural microfeatures ($f_1$-$f_n$); wherein the indicated coordinates x, y and z characterize a numerical center of the individual internal structural microfeatures - e.g. a center of gravity of the individual internal structural microfeature, and wherein generating the digital object identifier comprises identifying at least 10, preferably at least 100 individual

internal structural microfeatures ($f_1$-$f_n$) and arranging at least three of the detected parameters for each identified individual internal structural microfeature ($f_1$-$f_n$) in a matrix, wherein the matrix is the digital object identifier (100).

3. The method according to claim 1 - 2, wherein the digital image data are generated during the additive manufacturing process.

4. The method according to claim 1 - 3, further comprising:

   - defining a range for the parameter,

   wherein only individual internal structural microfeatures (f) falling within the range are used for generating the digital object identifier (100).

5. The method according to claim 4, wherein a number (n) of identified individual internal structural microfeatures ($f_1$-$f_n$) is reduced from a total number (N) of identified individual internal structural microfeatures ($f_1$-$f_n$) to a range within

   n = 1 - 1000, preferably to
   n = 10 - 100, more preferably
   n = 10 - 30 by applying the range.

6. The method according to claim 5, wherein the range is selected from

   a range for a diameter d, a length *l*, or a thickness t,
   wherein the length *l*, the diameter d, and the thickness t is selected within the range of:

   $$1 \ \mu m \ \leq d \leq 2 \ mm;$$

   preferably $5 \ \mu m \leq d \leq 2 \ mm;$

   $$1 \ \mu m \leq l \leq 2 \ mm;$$

   and

   $$1 \ \mu m \leq t \leq 2 \ mm.$$

7. The method according to claim 6, wherein the identified individual internal structural microfeature ($f_1$-$f_n$) is a pore and/or an inclusion, and the detected parameter is a volume $V_i$ of an $i^{th}$ pore and/or the volume of the $V_i$ of an $i^{th}$ inclusion,

   wherein generating the digital object identifier comprises

   - detecting and indicating a volume fraction epsilon ($\varepsilon$),
   with epsilon ($\varepsilon$) = sum($V_i$)/$V_{Comp}$ for the pore and/or for the inclusion as a checksum for checking the digital object identifier;

   wherein sum($V_i$) is a total volume of all n pores or all n inclusions within the defined range, and $V_{Comp}$ is the total volume of the component (c).

8. The method according to any of claims 1 to 7, wherein the x, y and z coordinates of a first identified individual internal structural microfeature ($f_1$-$f_n$) relate to a virtual origin (v), wherein

   the virtual origin (v) comprises the x, y and z coordinates of a second identified individual internal structural microfeature ($f_1$-$f_n$) ; or
   the virtual origin (v) comprises a mark, selected from a prominent structure at a contour of the component (c);
   wherein the x, y and z coordinates of the first identified individual internal structural microfeature ($f_1$-$f_n$) indicate a minimum or a maximum extension or distance of the first individual internal structural microfeature to the second individual internal structural microfeature along an

x-, an y-, and an z- axis.

9. The method according to any of claims 1 to 8, wherein the imaging technique is selected from:
a digital radiography, an X-ray computed tomography, an X-ray diffraction, and an infrared imaging technique.

10. The method according to any of claims 2 - 9, wherein the matrix comprises a table encompassing the detected parameters arranged in columns and rows, wherein each column or row characterizes one identified individual internal structural microfeature ($f_1$-$f_n$).

11. The method according to claim 10, wherein the digital object identifier (100, 110, 120) is compressed and is represented by an alphanumeric and/or by a digital string, by a 2D digital code, e.g. a QR code; or by a 3D digital code.

12. The method according to any of claims 1 -11, further comprising:

- generating a database, the database comprising at least one digital object identifier and one of: a name and/or a product number of the component (c), a picture of the component (c), a fabrication date of the component (c), a lot-number of a material used for manufacturing the component (c), a name and/or number of a customer which uses the component (c).

13. The method according to any of claims 1 to 12, wherein the additive manufacturing process is selected from:

- a powder bed fusion (LPBF) technique and its variations Selective Laser Melting (SLM), Selective Laser Sintering (SLS), Electron Beam Melting (EBM) and Direct Metal Laser Sintering (DMLS), which are all applied to a layer or a bed comprising metal and/or ceramic particles;
- a binder jetting or a material jetting technique used with particles comprising a polymer, a ceramic, or a metal;
- a material extrusion technique, comprising a continuous deposition of the extruded material; and
- a wire arc melting technique, comprising a metal melting in an electric arc.

14. Use of a digital object identifier (100, 120, 130) for identifying a component (c),
wherein the digital object identifier (100, 120, 130) is generated according to any of claims 1 to 13, and the component (c) is selected from a part which is used in a field selected from: aviation industry, military, aerospace technology, medical technology, reactor and power plant technology, wind turbines, safety related applications, and automotive industry.

15. Use according to claim 14 comprising an image registration process, wherein the component (c) is recognized as a previously known component (c) by a matching of the digital object identifier of the component (c) with an entry of a database comprising a pre-existing digital object identifier which is identical with the digital object identifier of the component (c); or - alternatively - wherein the component (c) is recognized as a previously unknown component (c') and/or as a counterfeit (c') by a mis-matching of the digital object identifier of the component (c') with entries of the database comprising pre-existing digital object identifiers.


**Patentansprüche**

1. Verfahren (1000) zum Erzeugen eines digitalen Objektidentifikators (100, 110, 120) eines Bauteils (c), das Folgendes aufweist:

- Empfangen von digitalen Bilddaten des Bauteils (c), wobei das Bauteil (c) durch ein additives Fertigungsverfahren hergestellt wird;
- Identifizieren einzelner interner struktureller Mikromerkmale ($f_1$-$f_n$) innerhalb des Bauteils (c) in den digitalen Bilddaten des Bauteils (c);
- Bestimmen jeweiliger Koordinaten der identifizierten einzelnen internen strukturellen Mikromerkmale ($f_1$-$f_n$), wobei jede Koordinate x, y und z aufweist, wobei das Bestimmen der jeweiligen Koordinaten das Analysieren von Positionen der einzelnen internen strukturellen Mikromerkmale ($f_1$-$f_n$) in den digitalen Bilddaten umfasst; und
- Erzeugen des digitalen Objektidentifikators (100) der Bauteil (c) unter Angabe der jeweiligen Koordinaten (x, y und z) der identifizierten einzelnen internen strukturellen Mikromerkmale ($f_1$-$f_n$);
wobei die einzelnen internen strukturellen Mikrostrukturen ($f_1$-$f_n$) während des additiven Herstellungsprozesses des Bauteils (c) verursacht werden und ausgewählt werden aus:

i) einer Mikrostruktur, ausgewählt aus: einem Hohlraum, einer Pore, einem Riss, einer Dichteninhomogenität, einem Einschluss, einem Bereich mit einer von der Hauptphase des Bauteils verschiedenen Dichte und ii) einer kristallographischen Struktur, ausgewählt aus: einem Korn, das eine kristallographische Symmetrieform wie kubisch, tetragonal, trigonal, hexagonal oder orthorhombisch umfasst; einer intermetallischen Phase; und einem einkristallinen Bereich; und

wobei die einzelnen internen strukturellen Mikrostrukturen ($f_1$-$f_n$) bauteileigene Mikrostrukturen sind, die zufällig im Bauteil (c) verteilt sind.

2. Verfahren nach Anspruch 1, das ferner Folgendes aufweist:

- Erfassen eines Parameters der identifizierten individuellen internen Struktur-Mikromerkmale ($f_1$-$f_n$), ausgewählt aus: einer Länge, einem Abstand, einem Durchmesser, einer Oberfläche und einem Volumen, einem Grauwert und einer Oberflächenrauhigkeit;
wobei die angegebenen Koordinaten x, y und z ein numerisches Zentrum der einzelnen internen Struktur-Mikromerkmale ($f_1$-$f_n$) charakterisieren - z. B. einen Schwerpunkt des einzelnen internen Struktur-Mikroelements, und
wobei das Erzeugen des digitalen Objektidentifikators das Identifizieren von mindestens 10, vorzugsweise mindestens 100 individuellen internen strukturellen Mikromerkmalen ($f_1$-$f_n$) und das Anordnen von mindestens drei der erfassten Parameter für jedes identifizierte individuelle interne strukturelle Mikromerkmal ($f_1$-$f_n$) in einer Matrix aufweist,
wobei die Matrix der digitale Objektidentifikator (100) ist.

3. Verfahren nach Anspruch 1 bis 2, wobei die digitalen Bilddaten während des additiven Fertigungsprozesses erzeugt werden.

4. Verfahren nach Anspruch 1 - 3, das ferner Folgendes aufweist:

- Festlegen eines Bereichs für den Parameter,

wobei nur einzelne interne Struktur-Mikromerkmale (f), die in den Bereich fallen, zum Erzeugen des digitalen Objektidentifikators (100) verwendet werden.

5. Verfahren nach Anspruch 4, wobei eine Anzahl (n) identifizierter individueller interner struktureller Mikromerkmale ($f_1$-$f_n$) von einer Gesamtzahl (N) identifizierter individueller interner struktureller Mikromerkmale ($f_1$-$f_n$) auf einen Bereich begrenzt werden innerhalb

n= 1 - 1000, vorzugsweise bis
n= 10 - 100, vorzugsweise
n= 10 - 30 durch Anwendung des Bereichs.

6. Verfahren nach Anspruch 5, wobei der Bereich aus einem Bereich für

einen Durchmesser d, eine Länge *l* oder eine Dicke t ausgewählt wird,
wobei die Länge *l*, der Durchmesser d und die Dicke t innerhalb des Bereichs ausgewählt wird von:

$$1\ \mu m \leq d \leq 2\ mm;$$

vorzugsweise $5\ \mu m \leq d \leq 2\ mm;$

$$1\ \mu m \leq l \leq 2\ mm;$$

und

$$1\ \mu m \leq t \leq 2\ mm$$

7. Verfahren nach Anspruch 6, wobei das identifizierte individuelle interne strukturelle Mikromerkmal ($f_1$-$f_n$) eine Pore

und/oder ein Einschluss ist und der erfasste Parameter ein Volumen $V_i$ einer i-ten Pore und/oder das Volumen $V_i$ eines i-ten Einschlusses ist, wobei die Erzeugung des digitalen Objektidentifikators Folgendes aufweist

- Erfassen und Anzeigen eines Volumenanteils epsilon ($\varepsilon$),

mit epsilon ($\varepsilon$)= sum $(V_l)$ / $V_{Comp}$ für die Pore und/oder für den Einschluss als Prüfsumme zur Überprüfung des digitalen Objektidentifikators;

wobei sum $(V_i)$ das Gesamtvolumen aller n Poren oder aller n Einschlüsse innerhalb des definierten Bereichs ist, und $V_{Comp}$ das Gesamtvolumen des Bauteil (c) ist.

8. Verfahren nach einem der Ansprüche 1 bis 7,

wobei sich die x-, y- und z-Koordinaten eines ersten identifizierten individuellen internen strukturellen Mikromerkmals ($f_1$-$f_n$) auf einen virtuellen Ursprung (v) beziehen,
wobei der virtuelle Ursprung (v) die x-, y- und z-Koordinaten eines zweiten identifizierten individuellen internen strukturellen Mikromerkmals ($f_1$-$f_n$) umfasst; oder
der virtuelle Ursprung (v) eine Markierung aufweist, ausgewählt aus einer markanten Struktur an einer Kontur des Bauteils (c);
wobei die x-, y- und z-Koordinaten des ersten identifizierten individuellen internen strukturellen Mikromerkmals ($f_1$-$f_n$) eine minimale oder maximale Ausdehnung oder Entfernung des ersten individuellen internen Struktur-Mikromerkmals zu dem zweiten individuellen internen strukturellen Mikromerkmal entlang einer x-, eine y- und eine z-Achse anzeigen.

9. Verfahren nach einem der Ansprüche 1 bis 8, wobei die Bildgebungstechnik ausgewählt ist aus: einer digitalen Radiographie, einer Röntgen-Computertomographie, einer Röntgenbeugung und einem Infrarot-Bildgebungsverfahren.

10. Verfahren nach einem der Ansprüche 2 bis 9, wobei die Matrix eine Tabelle aufweist, die die erfassten Parameter in Spalten und Zeilen angeordnet enthält, wobei jede Spalte oder Zeile ein bestimmtes internes strukturelles Mikromerkmal ($f_1$-$f_n$) kennzeichnet.

11. Verfahren nach Anspruch 10, wobei der digitale Objektidentifikator (100, 110, 120) komprimiert ist und durch eine alphanumerische und/oder eine digitale Zeichenfolge, durch einen digitalen 2D-Code, z. B. einen QR-Code, oder durch einen digitalen 3D-Code dargestellt wird.

12. Verfahren nach einem der Ansprüche 1 bis 11, das ferner Folgendes aufweist:

- Erzeugen einer Datenbank, wobei die Datenbank mindestens einen digitalen Objektidentifikator und eines der folgenden Merkmale aufweist: einen Namen und/oder eine Produktnummer des Bauteils (c), ein Bild des Bauteils (c), ein Herstellungsdatum des Bauteils (c), eine Chargennummer eines zur Herstellung des Bauteils (c) verwendeten Materials, einen Namen und/oder eine Nummer eines Kunden, der das Bauteil (c) verwendet.

13. Verfahren nach einem der Ansprüche 1 bis 12, wobei das additive Herstellungsverfahren ausgewählt ist aus:

einem Pulverbettschmelzverfahren (LPBF) und seinen Varianten Selektives Laserschmelzen (SLM), Selektives Lasersintern (SLS), Elektronenstrahlschmelzen (EBM) und Direktes Metall-Lasersintern (DMLS), die alle auf eine Schicht oder ein Bett angewendet werden, das Metall- und/oder Keramikpartikel aufweist;
einem Bindemittelstrahlverfahren oder einem Materialstrahlverfahren, das mit Partikeln verwendet wird, die ein Polymer, eine Keramik oder ein Metall aufweisen;
einer Materialextrusionstechnik, die eine kontinuierliches Aufbringen des extrudierten Materials aufweist; und
einer Drahtlichtbogenschmelztechnik, umfassend ein Schmelzen von Metall in einem Lichtbogen.

14. Verwendung eines digitalen Objektidentifikators (100, 120, 130) zur Identifizierung eines Bauteils (c), wobei der digitale Objektidentifikator (100, 120, 130) nach einem der Ansprüche 1 bis 13 erzeugt wird und das Bauteil (c) aus einem Teil ausgewählt ist, das in einem Bereich verwendet wird, der ausgewählt ist aus: Luftfahrtindustrie, Militär, Luft- und Raumfahrttechnik, Medizintechnik, Reaktor- und Kraftwerkstechnik, Windkraftanlagen, sicherheitsrelevanten Anwendungen und Automobilindustrie.

**15.** Verwendung nach Anspruch 14, umfassend einen Bildregistrierungsprozess, wobei das Bauteil (c) als ein zuvor bekanntes Bauteil (c) durch einen Abgleich des digitalen Objektidentifikators des Bauteils (c) mit einem Eintrag einer Datenbank erkannt wird, der einen bereits existierenden digitalen Objektidentifikator aufweist, der mit dem digitalen Objektidentifikator des Bauteils (c) identisch ist; oder - alternativ - wobei die Bauteil (c) als eine zuvor unbekannte Bauteil (c') und/oder als eine Fälschung (c') durch eine falsche Übereinstimmung des digitalen Objektidentifikators der Bauteil (c') mit Einträgen der Datenbank, die bereits vorhandene digitale Objektidentifikatoren aufweisen, erkannt wird.

**Revendications**

**1.** Procédé (1000) de génération d'un identifiant d'objet numérique (100, 110, 120) d'un composant (c), comprenant le fait de :

- obtenir des données d'image numérique du composant (c), dans lequel le composant (c) est produit par un processus de fabrication additive ;
- identifier des microcaractéristiques structurelles internes individuelles ($f_1$-$f_n$) à l'intérieur du composant (c) dans les données d'image numérique du composant (c) ;
- déterminer les coordonnées respectives des microcaractéristiques structurelles internes individuelles identifiées ($f_1$-$f_n$), chaque coordonnée comprenant x, y et z, dans laquelle la détermination des coordonnées respectives comprend l'analyse des positions des microcaractéristiques structurelles internes individuelles ($f_1$-$f_n$) dans les données d'image numérique; et
- générer l'identifiant d'objet numérique (100) du composant (c) en indiquant les coordonnées respectives (x, y et z) des microcaractéristiques structurelles internes individuelles identifiées ($f_1$-$f_n$) ;
dans lequel les microcaractéristiques structurelles internes individuelles ($f_1$-$f_n$) sont causées pendant le processus de fabrication additive du composant (c), et sont choisies parmi :

   i) une microstructure choisie parmi : un vide, un pore, une fissure, une inhomogénéité de densité, une inclusion, une région de densité différente de la phase principale du composant, et
   ii) une structure cristallographique choisie parmi : un grain comprenant une forme de symétrie cristallographique telle qu'une forme cubique, tétragonale, trigonale, hexagonale ou orthorhombique; une phase intermétallique; et une région monocristalline; et

dans lesquelles les microcaractéristiques structurelles internes individuelles ($f_1$-$f_n$) sont des microcaractéristiques inhérentes au composant qui sont réparties de manière aléatoire dans le composant (c).

**2.** Procédé selon la revendication 1, comprenant en outre le fait de :

- détecter un paramètre des microcaractéristiques structurelles internes individuelles identifiées ($f_1$-$f_n$), choisi parmi : une longueur, une distance, un diamètre, une surface et un volume, une valeur de gris et une rugosité de surface ;
dans lequel les coordonnées x, y et z indiquées caractérisent un centre numérique des microcaractéristiques structurelles internes individuelles ($f_1$-$f_n$) ; dans lequel les coordonnées x, y et z indiquées caractérisent un centre numérique des microcaractéristiques structurelles internes individuelles - par exemple un centre de gravité de la microcaractéristique structurelle interne individuelle, et
dans lequel la génération de l'identifiant d'objet numérique comprend l'identification d'au moins 10, de préférence au moins 100 microcaractéristiques structurelles internes individuelles ($f_1$-$f_n$) et l'agencement d'au moins trois des paramètres détectés pour chaque microcaractéristique structurelle interne individuelle identifiée ($f_1$-$f_n$) dans une matrice, dans laquelle la matrice est l'identifiant d'objet numérique (100).

**3.** Procédé selon les revendications 1 et 2, dans lequel les données d'image numérique sont générées pendant le processus de fabrication additive.

**4.** Procédé selon les revendications 1 à 3, comprenant en outre le fait de :

- définir une plage pour le paramètre,

dans lequel seules les microcaractéristiques structurelles internes individuelles (f) comprises dans la plage sont utilisées pour générer l'identifiant d'objet numérique (100).

5. Procédé selon la revendication 4, dans lequel un nombre (n) de microcaractéristiques structurelles internes individuelles identifiées ($f_1$-$f_n$) est réduit d'un nombre total (N) de microcaractéristiques structurelles internes individuelles identifiées ($f_1$-$f_n$) à une plage comprise dans

n = 1 -1000, de préférence à
n = 10 -100, plus préférablement à
n = 10 - 30, en appliquant la plage.

6. Procédé selon la revendication 5, dans lequel la plage est choisie parmi

une plage pour un diamètre d, une longueur /, ou une épaisseur *t*,
dans laquelle la longueur /, le diamètre *d*, et l'épaisseur *t* sont choisis dans la plage de :

$$1\ \mu m \leq d \leq 2\ mm\ ;$$

de préférence 5 $\mu m \leq d \leq 2$ mm ;

$$1\ \mu m \leq l \leq 2\ mm\ ;$$

et

$$1\ \mu m \leq t \leq 2\ mm.$$

7. Procédé selon la revendication 6, dans lequel la microcaractéristique structurelle interne individuelle identifiée ($f_1$-$f_n$) est un pore et/ou une inclusion, et le paramètre détecté est un volume $V_i$ d'un $i^{ème}$ pore et/ou le volume $V_i$ d'une $i^{ème}$ inclusion,

dans lequel la génération de l'identifiant d'objet numérique comprend le fait de :

- détecter et indiquer une fraction de volume « epsilon » ($\varepsilon$), avec epsilon ($\varepsilon$) = somme($V_i$)/$V_{Comp}$ pour le pore et/ou pour l'inclusion en tant que somme de contrôle pour vérifier l'identifiant d'objet numérique ;

dans laquelle somme($V_i$) est le volume total de tous les n pores ou de toutes les n inclusions dans la plage définie, et $V_{Comp}$ est le volume total du composant (c).

8. Procédé selon l'une quelconque des revendications 1 à 7, dans lequel les coordonnées x, y et z d'une première microcaractéristique structurelle interne individuelle identifiée ($f_1$-$f_n$) se rapportent à une origine virtuelle (v), dans laquelle

l'origine virtuelle (v) comprend les coordonnées x, y et z d'une deuxième microcaractéristique structurelle interne individuelle identifiée ($f_1$-$f_n$) ; ou
l'origine virtuelle (v) comprend une marque, choisie parmi une structure proéminente sur un contour du composant (c) ;
dans lesquelles les coordonnées x, y et z de la première microcaractéristique structurelle interne individuelle identifiée ($f_1$-$f_n$) indiquent une extension ou une distance minimale ou maximale de la première microcaractéristique structurelle interne individuelle par rapport à la deuxième microcaractéristique structurelle interne individuelle le long d'un axe x, d'un axe y et d'un axe z.

9. Procédé selon l'une quelconque des revendications 1 à 8, dans lequel la technique d'imagerie est choisie parmi : une radiographie numérique, une tomodensitométrie, une diffraction aux rayons X et une technique d'imagerie infrarouge.

10. Procédé selon l'une quelconque des revendications 2 à 9, dans lequel la matrice comprend une table englobant les paramètres détectés agencés en colonnes et en lignes, dans lequel chaque colonne ou ligne caractérise une microcaractéristique structurelle interne individuelle identifiée ($f_1$-$f_n$).

11. Procédé selon la revendication 10, dans lequel l'identifiant d'objet numérique (100, 110, 120) est compressé et est représenté par une chaîne alphanumérique et/ou par une chaîne numérique, par un code numérique 2D, par exemple un code QR; ou par un code numérique 3D.

12. Procédé selon l'une quelconque des revendications 1 à 11, comprenant en outre le fait de :

   - générer une base de données, la base de données comprenant au moins un identifiant d'objet numérique et l'un parmi : un nom et/ou un numéro de produit du composant (c), une photo du composant (c), une date de fabrication du composant (c), un numéro de lot d'un matériau utilisé pour la fabrication du composant (c), un nom et/ou un numéro d'un client qui utilise le composant (c).

13. Procédé selon l'une quelconque des revendications 1 à 12, dans lequel le processus de fabrication additive est choisi parmi :

   - une technique de fusion laser sur lit de poudre (LPBF) et ses variantes : fusion sélective par laser (SLM), frittage sélectif par laser (SLS), fusion par faisceau d'électrons (EBM) et frittage laser direct de métal (DMLS), qui sont toutes appliquées à une couche ou à un lit comprenant des particules de métal et/ou de céramique;
   - une technique de projection de liant ou de projection de matériau utilisée avec des particules comprenant un polymère, une céramique ou un métal ;
   - une technique d'extrusion de matériau, comprenant un dépôt continu du matériau extrudé ; et
   - une technique de fusion à l'arc, comprenant une fusion de métal dans un arc électrique.

14. Utilisation d'un identifiant d'objet numérique (100, 120, 130) pour identifier un composant (c), dans lequel l'identifiant d'objet numérique (100, 120, 130) est généré selon l'une quelconque des revendications 1 à 13, et le composant (c) est choisi parmi une pièce utilisée dans un domaine choisi parmi : l'industrie aéronautique, l'armée, la technologie aérospatiale, la technologie médicale, la technologie des réacteurs et des centrales électriques, les turbines éoliennes, les applications liées à la sécurité et l'industrie automobile.

15. Utilisation selon la revendication 14, comprenant un processus d'enregistrement d'image, dans lequel le composant (c) est reconnu comme un composant (c) précédemment connu par une correspondance de l'identifiant d'objet numérique du composant (c) avec une entrée d'une base de données comprenant un identifiant d'objet numérique préexistant qui est identique à l'identifiant d'objet numérique du composant (c); ou - en variante - dans lequel le composant (c) est reconnu comme un composant (c') précédemment inconnu et/ou comme une contrefaçon (c') par une mauvaise correspondance de l'identifiant d'objet numérique du composant (c') avec des entrées de la base de données comprenant des identifiants d'objets numériques préexistants.

| 1 | 21 | 23 | 45 | 44 | 106 | 98 | 22 | 45.5 | 102 | pore | 4589 | 3147 | 1,46 |
| 2 | 44 | 47 | 42 | 25 | 1 | 3 | 45.6 | 20.5 | 2 | pore | 5692 | 3376 | 1,69 |
| 3 | 74 | 80 | 13 | 15 | 66 | 67 | 77 | 12 | 66.5 | pore | 4671 | 3455 | 1,35 |
| 4 | 33 | 35 | 78 | 88 | 99 | 103 | 34 | 73 | 101 | inclusion | 256 | 3545 | 0,07 |
| 5 | 1 | 5 | 24 | 27 | 56 | 58 | 3 | 22.5 | 57 | inclusion | 465 | 3912 | 0,12 |
| 6 | 110 | 113 | 5 | 7 | 56 | 59 | 111.5 | 4 | 57.5 | crack | 2478 | 3801 | 0,65 |

FIG. 1

100

| 1 | 21 | 23 | 45 | 44 | 106 | 98 | 22 | 45.5 | 102 | pore | 4589 | 3147 | 1,46 |
| 2 | 44 | 47 | 42 | 25 | 1 | 3 | 45.6 | 20.5 | 2 | pore | 5692 | 3376 | 1,69 |
| 3 | 74 | 80 | 13 | 15 | 66 | 67 | 77 | 12 | 66.5 | pore | 4671 | 3455 | 1,35 |
| 4 | 33 | 35 | 78 | 88 | 99 | 103 | 34 | 73 | 101 | inclusion | 256 | 3545 | 0,07 |
| 5 | 1 | 5 | 24 | 27 | 56 | 58 | 3 | 22.5 | 57 | inclusion | 465 | 3912 | 0,12 |
| 6 | 110 | 113 | 5 | 7 | 56 | 59 | 111.5 | 4 | 57.5 | crack | 2478 | 3801 | 0,65 |

110

|1|21|23|45|44|106|98|22|45,5|102|P|4589|3147|1,46|
|2|44|47|22|25|1|3|45,5|20,5|2|P|5692|3376|1,69|
|3|74|80|13|15|66|67|77|12|66,5|P|4671|3455|1,35|
|4|33|35|78|88|99|103|34|73|101|E|256|3545|0,07|
|5|1|5|24|27|56|58|3|22,5|57|E|465|3912|0,12|
|6|110|113|5|7|56|59|111,5|4|57,5|R|2478|3801|0,65|

120

FIG. 2

1000

```
┌─────────────────────────┐
│          1100           │
└─────────────────────────┘
             │
             ▼
┌─────────────────────────┐
│          1200           │
└─────────────────────────┘
             │
             ▼
┌─────────────────────────┐
│          1300           │
└─────────────────────────┘
             │
             ▼
┌─────────────────────────┐
│          1400           │
└─────────────────────────┘
             │
             ▼
┌─────────────────────────┐
│          1500           │
└─────────────────────────┘
             │
             ▼
┌─────────────────────────┐
│          1600           │
└─────────────────────────┘
             │
             ▼
┌─────────────────────────┐
│          1700           │
└─────────────────────────┘
```

FIG. 3

FIG. 4

REFERENCES CITED IN THE DESCRIPTION

**Patent documents cited in the description**

- US 2016042261 A1

- US 2018293591 A1

**Non-patent literature cited in the description**

- My Smartphone Recognizes Genuine QR Codes! Practical Unclonable QR Code via 3D Printing. **SONG CHEN et al.** PROC. ACM ON INTERACTIVE, MOBILE, WEARABLE AND UBIQUITOUS TECHNOLOGIES. ACMPUB27, 2018, vol. 2, 1-20
- Protection against Counterfeiting Attacks in 3D Printing by Streaming Signature-embedded Manufacturing Process Instructions. **TIWARI AKASH et al.** PROC 2021 RESEARCH ON OFFENSIVE AND DEFENSIVE TECHNIQUES IN THE CONTEXT OF MAN AT THE END (MATE) ATTACKS. ACMPUB27, 2021, 11-21

- Microstructure-Based Counterfeit Detection in Metal Part Manufacturing. **DACHOWICZ ADAM et al.** JOURNAL OF METALS. SPRINGER, 2017, vol. 69, 2390-2396
- **O. SALMAN** ; **A. FUNK** ; **A. WASKE et al.** Additive Manufacturing of a 316L Steel Matrix Composite Reinforced with CeO2 Particles: Process Optimization by Adjusting the Laser Scanning Speed. *Technologies*, 2018, vol. 6, 25